(19) Europäisches Patentamt
European Patent Office
Office européen des brevets

(11) **EP 3 166 978 B1**

(12) **EUROPÄISCHE PATENTSCHRIFT**

(45) Veröffentlichungstag und Bekanntmachung des Hinweises auf die Patenterteilung:
**16.05.2018 Patentblatt 2018/20**

(21) Anmeldenummer: **15735948.0**

(22) Anmeldetag: **08.07.2015**

(51) Int Cl.:
*C08F 2/30* (2006.01)          *C08K 5/053* (2006.01)
*C08F 212/08* (2006.01)        *C08F 2/20* (2006.01)
*B05D 7/02* (2006.01)          *B05D 1/02* (2006.01)
*B05D 1/18* (2006.01)          *B05D 3/02* (2006.01)
*C04B 26/06* (2006.01)         *C09D 133/08* (2006.01)
*C09J 133/08* (2006.01)        *C08L 33/08* (2006.01)
*C08L 25/04* (2006.01)

(86) Internationale Anmeldenummer:
**PCT/EP2015/065637**

(87) Internationale Veröffentlichungsnummer:
**WO 2016/005468 (14.01.2016 Gazette 2016/02)**

(54) **VERFAHREN ZUR HERSTELLUNG GEFRIER-AUFTAU-STABILER, WAESSRIGER DISPERSIONEN**

METHOD FOR PRODUCING FREEZE-THAW STABLE, AQUEOUS DISPERSIONS

PROCÉDÉ DE PRÉPARATION DE DISPERSIONS AQUEUSES STABLES À LA CONGÉLATION - DÉCONGÉLATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **10.07.2014 EP 14176543**
**10.07.2014 DE 202014005635 U**

(43) Veröffentlichungstag der Anmeldung:
**17.05.2017 Patentblatt 2017/20**

(73) Patentinhaber: **BASF SE**
**67056 Ludwigshafen am Rhein (DE)**

(72) Erfinder:
• **CENTNER, Alexander**
**67127 Rödersheim-Gronau (DE)**
• **KRUEGER, Christian**
**67346 Speyer (DE)**
• **WILMS, Valerie**
**68165 Mannheim (DE)**

(74) Vertreter: **BASF IP Association**
**BASF SE**
**G-FLP-C006**
**67056 Ludwigshafen (DE)**

(56) Entgegenhaltungen:
**EP-A1- 0 536 588          EP-A1- 0 536 596**
**WO-A1-2012/117017        WO-A1-2013/083504**
**DE-A1- 19 650 790         US-A- 5 358 998**
**US-A1- 2012 225 978**

**Beschreibung**

Die Erfindung betrifft ein Verfahren zur Herstellung einer Gefrier-Auftau-stabilen, wässrigen Dispersion, eine Gefrier-Auftau-stabile, wässrige Dispersion, erhältlich nach dem erfindungsgemäßen Verfahren, die Verwendung der Gefrier-Auftau-stabilen, wässrigen Dispersion als Bindemittel, ein Verfahren zur Herstellung eines Formkörpers unter Verwendung der erfindungsgemäßen Dispersion sowie eine Gefrier-Auftau-stabile Formulierung.

Saccharid-haltige, wässrige Zusammensetzungen sind seit längerem bekannt. US 5,618,876 beschreibt Latex-Bindemittel, die zur Herstellung von Frost- und Auftau-beständiger Latexanstrichmittel verwendet werden, welche frei von flüchtigen, die Frost- und Auftauwasserbeständigkeit und die Verarbeitungszeit beeinflussenden Additiven sein können. Die Latex-Bindemittel werden hergestellt, indem ein Polymer, das das Polymerisationsprodukt eines polymerisierbaren Saccharid-Monomers ist, mit einem Acryl-Monomer, und wahlweise einem Styrol-Monomer, einem ionischen Monomer und einem Nasshaftungs-Monomeren, vereinigt wird.

Die EP 0 276 770 A2 beschreibt Leimungsmittel für Papier auf Basis feinteiliger wässriger Dispersionen. Das Dokument beschreibt Leimungsmittel für Papier auf Basis feinteiliger wässriger Dispersionen von Copolymerisaten, die durch Copolymerisieren von 40 bis 140 Gew.-teilen einer Monomermischung aus (a) 20 bis 65 Gew.-% (Meth)acrylnitril, (b) 35 bis 80 Gew.-% eines oder mehrerer Acrylsäureester von einwertigen, gesättigten $C_3$-bis $C_8$-Alkoholen und (c) 0 bis 10 Gew.-% anderen ethylenisch ungesättigten copolymerisierbaren Monomeren, wobei die Summe der Gewichtsprozente (a), (b) und (c) immer 100 beträgt, nach Art einer Emulsionspolymerisation in 100 Gewichtsteilen einer wässrigen Lösung, die 2,7 bis 15 Gew.-% einer abgebauten Stärke mit einer Viskosität $\eta_i$ = 0,04 bis weniger als 0,12 dl/g gelöst enthält, bei Temperaturen von 40 bis 100 °C in Gegenwart eines Peroxidgruppen enthaltenden Initiators erhältlich sind.

WO 2012/117017 A1 beschreibt eine wässrige Bindemittelzusammensetzung, enthaltend a) wenigstens ein Polymerisat P und wenigstens eine Saccharidverbindung S. Dabei ist das Polymerisat P aufgebaut aus verschiedenen ungesättigten Monomeren.

Die EP 0 536 597 A1 beschreibt wässrige Polymerdispersionen, die durch radikalische Polymerisation ungesättigter Monomere erhältliche Polymerisate sowie verzuckerte Stärke enthalten und deren Verwendung. Insbesondere werden wässrige Polymerisat-Dispersionen von durch radikalische Polymerisation ungesättigter Monomeren erhältlichen Polymerisaten beschrieben, die wenigstens ein durch Hydrolyse in wässriger Phase erhältliches Stärkeabbauprodukt zugesetzt enthalten, das ein gewichtsmittleres Molekulargewicht $M_w$ von 2500 bis 25000 aufweist.

Dispersionen, wie Wasser-in-Öl-Emulsionen, die darin dispergiert wasserlösliche Polymere enthalten, sind im Stand der Technik bekannt. Solche Emulsionen haben eine weite Vielfalt von Verwendungen gefunden, beispielsweise als Flockungsmittel in der Bergbau- und Papierindustrie und bei der Abwasserbehandlung sowie als Mittel zur Mobilitätssteuerung bei der sekundären Ölgewinnung. Viele dieser Anwendungen finden in Umgebungen mit niedriger Temperatur statt, unterhalb von 0 °C und sogar bis zum - 20 °C, wo das Gefrieren der Emulsionen vor der Verwendung wahrscheinlich stattfinden wird. Werden solche gefrorenen Emulsionen zur Verwendung aufgetaut, gibt es im Allgemeinen ein Problem der Gelbildung und/oder einem Qualitätsverlust des Produktes. Zur Überwindung dieses Problems sah sich der Stand der Technik in der Vergangenheit gezwungen, Glykole oder anorganische Salze hinzuzufügen, um den Gefrierpunkt der Emulsionen herabzusetzen oder die Menge an wasserlöslichem Polymer in dem System für ein gegebenes Tensid-Niveau zu verringern oder die Emulsion zu dehydratisieren oder alternativ spezielle teure Tenside mit niedrigem Titer zu verwenden.

In Anbetracht der Tatsache, dass alle diese vorgeschlagenen Lösungen dazu geführt haben, dass entweder die Leistung des Produktes verringert wurde oder die Kosten der resultierenden Emulsionen beträchtlich erhöht wurden, besteht ein fortlaufender Bedarf nach einem Verfahren zur Verbesserung der Gefrier-Auftau-Stabilität entsprechender Dispersionen während gleichzeitig die Gesamtmengen an dem im System vorhandenen Tensid minimiert werden sollte.

Daher war es die Aufgabe der vorliegenden Erfindung, ein Verfahren bereitzustellen, welches die Herstellung von verbesserten wässrigen Dispersionen erlaubt, sowie einer Gefrier-Auftau-stabilen, wässrigen Dispersion, welche nach einem solchen Verfahren erhältlich ist. Vorteilhafterweise sind diese Dispersionen frei von Gefrier-Aufbau-stabilisierenden Additiven.

Die Aufgabe wird gelöst durch ein Verfahren zur Herstellung einer Gefrier-Auftau-stabilen, wässrigen Dispersion umfassend die Schritte:

a) Bereitstellen einer Mischung A umfassend

- 20 - 79,5 Gew.-% wenigstens eines Esters aus ethylenisch ungesättigten Monomeren A,

- 20 - 79,5 Gew.-% wenigstens eines ethylenisch ungesättigten Monomeren B, welches sich von Monomer A unterscheidet,

- 0,5 - 5 Gew.-% wenigstens eines säuregruppenhaltigen ethylenisch ungesättigten Monomeren C, wobei die Gesamtmenge der Monomere A bis C 100 Gew.-% ergibt,

b) Bereitstellen von 20 - 55 Gew.-% mindestens einer Saccharidverbindung S, bezogen auf die Menge der zu polymerisierenden Monomere A bis C, wobei die Saccharidverbindung S Maltodextrin ist und DE-Werte von 3 - 20 und ein gewichtsmittleres Molekulargewicht von 15000 - 30000 g/mol aufweist,

c) Bereitstellen von 20 - 150 Gew.-% wasserlöslichen Lösungsmitteln und/oder Wasser W, bezogen auf die Menge der zu polymerisierenden Monomere A bis C,

d) Bereitstellen von 0,1 - 2 Gew.-% mindestens einem Polymerisationsinitiator I, bezogen auf die Menge der zu polymerisierenden Monomere A bis C,

e) Polymerisieren der Monomeren A bis C in Gegenwart von S, W und I zu dem Polymerisat P,

wobei die wässrige Dispersion mindestens einem Gefrier- und Auftauprozess ausgesetzt wird, wobei die Dispersion frei ist von Gefrier-Auftau-stabilisierenden Additiven und wobei Gefrier-Auftau-stabilisierende Additive anionische, kationische oder nichtionische Emulgatoren sind.

Die Aufgabe wird zudem gelöst durch eine Gefrier-Auftau-stabile, wässrige Dispersion, erhältlich nach dem erfindungsgemäßen Verfahren.

Es wurde gefunden, dass durch das erfindungsgemäße Verfahren zur Herstellung einer Gefrier-Auftau-stabilen, wässrigen Dispersion entsprechende Dispersionen zur Verfügung gestellt werden können, die nach mindestens einem Gefrier- und Auftauprozess nicht koagulieren.

Ein wesentlicher Bestandteil der Dispersion ist ein Polymerisat P, welches aufgebaut ist aus

- 20 - 79,5 Gew.-%, wenigstens eines Esters aus ethylenisch ungesättigten Monomeren A,

- 20 - 79,5 Gew.-%, wenigstens eines ethylenisch ungesättigten Monomeren B, welches sich von Monomer A unterscheidet,

- 0,5 - 5 Gew.-%, wenigstens eines säuregruppenhaltigen ethylenisch ungesättigten Monomeren C, wobei die Gesamtmenge der Monomere A bis C 100 Gew.-% ergibt.

Besonders bevorzugt ist das Polymerisat P ausschließlich aus den Monomeren A bis C aufgebaut.

Das Polymerisat P und das Wasser W, gegebenenfalls das wasserlösliche Lösungsmittel, bilden die Dispersion. Dabei kann das Polymerisat P fest oder flüssig vorliegen. Vorzugsweise liegt das Polymerisat P fest vor. Die erfindungsgemäße Dispersion kann auch als wässrige Polymerisatdispersion oder Emulsionspolymerisat bezeichnet werden.

Die Herstellung des Polymerisats P ist dem Fachmann prinzipiell geläufig und erfolgt beispielsweise durch radikalische Polymerisation der Monomere A bis C nach der Methode der Substanz-, Emulsions-, Lösungs-, Fällungs- oder Suspensionspolymerisation, wobei jedoch die radikalisch initiierte wässrige Emulsionspolymerisation insbesondere bevorzugt ist. Erfindungsgemäß vorteilhaft kann das Polymerisat P daher in einem wässrigen Medium dispergiert werden, d.h. in Form einer wässrigen Polymerisatdispersion eingesetzt werden. Die Durchführung von radikalisch initiierten Emulsionspolymerisationen von Monomeren in einem wässrigen Medium ist vielfach vorbeschrieben und dem Fachmann daher hinreichend bekannt [vgl. hierzu Emulsionspolymerisation in Encyclopedia of Polymer Science and Engineering, Vol. 8, Seiten 659 ff. (1987); D.C. Blackley, in High Polymer Latices, Vol. 1 , Seiten 35 ff. (1966); H. Warson, The Applications of Synthetic Resin Emulsions, Kapitel 5, Seiten 246 ff. (1972); D. Diederich, Chemie in unserer Zeit 24, Seiten 135 bis 142 (1990); Emulsion Polymerisation, Interscience Publishers, New York (1965); DE-A 40 03 422 und Dispersionen synthetischer Hochpolymerer, F. Hölscher, Springer-Verlag, Berlin (1969)]. Die radikalisch initiierte wässrige Emulsionspolymerisation erfolgt üblicherweise dergestalt, dass man die ethylenisch ungesättigten Monomeren, gegebenenfalls unter Mitverwendung von Dispergierhilfsmitteln, wie Emulgatoren und/oder Schutzkolloiden, in wässrigem Medium dispers verteilt und mittels wenigstens eines wasserlöslichen radikalischen Polymerisationsinitiators polymerisiert. Häufig werden bei den erhaltenen wässrigen Polymerisatdispersionen die Restgehalte an nicht umgesetzten ethylenisch ungesättigten Monomeren durch dem Fachmann ebenfalls bekannte chemische und/oder physikalische Methoden [siehe beispielsweise EP-A 771328, DE-A 19624299, DE-A 19621027, DE-A 19741 184, DE-A 19741 187, DE-A 19805122, DE-A 19828183, DE-A 19839199, DE-A 19840586 und 198471 15] herabgesetzt, der Polymerisatfeststoffgehalt durch Verdünnung oder Aufkonzentration auf einen gewünschten Wert eingestellt oder der wässrigen Polymerisatdispersion weitere übliche Zusatzstoffe, wie beispielsweise bakterizide, schäum- oder viskositätsmodifizierende Additive zugesetzt. Von dieser allgemeinen Verfahrensweise kann sich die Herstellung einer wässrigen Dispersion des Polymerisats P gemäß der vorliegenden Erfindung lediglich durch den spezifischen Einsatz der vorgenannten Monomeren A bis C unterscheiden. Dabei ist es selbstverständlich, dass zur Herstellung des Polymerisats P im Rahmen der vorliegenden Schrift auch die dem Fachmann geläufigen Saat-, Stufen- und Gradientenfahrweisen mit umfasst sein sollen.

Die Polymerisate P, insbesondere durch Emulsionspolymerisation zugänglich, können bevorzugt Glasübergangstemperaturen Tg im Bereich von $\geq$ -70 bis $\leq$ 150 °C, insbesondere bevorzugt von $\geq$ -20 bis $\leq$ 40 °C, und ganz besonders bevorzugt von $\geq$ 0 bis $\leq$ 25 °C aufweisen.

Durch gezielte Variationen von Art und Menge der Monomeren ist es dem Fachmann erfindungsgemäß möglich, Polymerdispersionen, insbesondere Polymerisate P, herzustellen, deren Polymere eine Glasübergangstemperatur im gewünschten Bereich aufweisen. Unter Glasübergangstemperatur Tg wird im Rahmen dieser Schrift die midpoint temperature nach ASTM D 3418-82 verstanden, ermittelt durch Differenzialthermoanalyse (DSC) [vergl. Auch Ullman's Encyclopedia of Industrial Chemistry, Seite 169, Verlag Chemie, Weinheim, 1992 und Zosel in Farbe und Lack, 82, Seiten 125 bis 134, 1976].

Nach Fox (T.G. Fox, Bull. Am. Phys. Soc. 1956 [Ser. II] 1, Seite 123 und gemäß Ullmann's Encyclopädie der technischen Chemie, Bd. 19, Seite 18, 4. Auflage, Verlag Chemie, Weinheim, 1980) gilt für die Glasübergangstemperatur von höchstens schwach vernetzten Mischpolymerisaten in guter Näherung:

$$1/Tg = x1/Tg1 + x2/Tg2 + .... xn/Tgn,$$

wobei x1, x2, .... xn die Massenbrüche der Monomeren 1, 2, .... n und Tg1, Tg2, .... Tgn die Glasübergangstemperaturen der jeweils nur aus einem der Monomeren 1, 2, .... n aufgebauten Polymerisaten in Grad Kelvin bedeuten. Die Glasübergangstemperaturen dieser Homopolymerisate der meisten ethylenisch ungesättigten Monomere sind bekannt (bzw. können in einfacher 25 an sich bekannter Weise experimentell ermittelt werden) und beispielsweise in J. Brandrup, E.H. Immergut, Polymer Handbook 1st Ed. J. Wiley, New York, 1966, 2nd Ed. J. Wiley, New York, 1975 und 3rd Ed. J. Wiley, New York, 1989, sowie in Ullmann's Encyclopedia of Industrial Chemistry, Seite 169, Verlag Chemie, Weinheim, 1992, aufgeführt.

Dabei ist es selbstverständlich, dass zur Herstellung des Polymerisats P im Rahmen der vorliegenden Erfindung auch die dem Fachmann geläufigen Saat-, Stufen-, Schuss- und Gradientenfahrweisen mit umfasst sein sollen. Die Polymerisation kann beispielsweise mittels der Methode der in-situ Saatfahrweise durchgeführt werden oder es wird eine Polymersaat als Polymerfremdsaat eingesetzt.

Im Sinne der vorliegenden Erfindung wird unter "Gefrier-Auftau-stabil" eine Dispersion verstanden, insbesondere eine wässrige Dispersion, die nach mindestens einem Gefriervorgang und einem Auftauvorgang nicht koaguliert. Bei dem Gefriervorgang erstarrt die wässrige Dispersion zu einem Feststoff und bei dem Auftauvorgang wird die gefrorene wässrige Dispersion auf die gleiche Temperatur gebracht, in der sie sich befand, bevor sie gefroren wurde. Bei dieser Auftautemperatur liegt der vormalige Feststoff wieder als wässrige Dispersion vor.

Geeignete Monomere A sind beispielsweise konjugierte, aliphatische $C_4$- bis $C_9$-Dienverbindungen, Ester aus Vinylalkohol und einer $C_1$- bis $C_{10}$-Monocarbonsäure, $C_1$- bis $C_{10}$-Alkylacrylat, $C_5$- bis $C_{10}$-Alkylmethacrylat, $C_5$- bis $C_{10}$-Cycloalkylacrylat und -methacrylat, $C_1$- bis $C_{10}$-Dialkylmaleinat und/oder $C_1$- bis $C_{10}$-Dialkylfumarat, Vinylether von $C_3$- bis $C_{10}$-Alkanolen. Insbesondere vorteilhaft werden als Monomere A Vinylacetat, Ethylacrylat, n-Propylacrylat, n-Butylacrylat, iso-Butylacrylat, sec-Butylacrylat, n-Hexylacrylat, 2-Ethylhexylacrylat, n-Hexylmethacrylat, 2-Ethylhexylmethacrylat, Di-n-butylmaleinat, Di-n-butylfumarat verwendet, wobei 2-Ethylhexylacrylat, n-Butylacrylat, 1,4-Butadien, Ethylacrylat oder Mischungen daraus insbesondere bevorzugt sind.

Vorzugsweise umfasst die Mischung A 47 - 60 Gew.-% wenigstens eines Esters aus ethylenisch ungesättigten Monomeren A, ganz besonders bevorzugt 50 bis 56 Gew.-% wenigstens eines Esters aus ethylenisch ungesättigten Monomeren A und insbesondere 55 Gew.-% wenigstens eines Esters aus ethylenisch ungesättigten Monomeren A.

Geeignete Monomere B sind beispielsweise vinylaromatische Monomere und $C_1$- bis $C_4$-Alkylmethacrylate. Unter vinylaromatischen Monomeren versteht man insbesondere Styrol, Derivate des Styrols oder des $\alpha$-Methylstyrols, in denen die Phenylkerne gegebenenfalls durch 1, 2 oder 3 $C_1$- bis $C_4$-Alkylgruppen, Halogen, insbesondere Brom oder Chlor und/oder Methoxygruppen substituiert sind. Ebenfalls geeignete Monomere B sind Acrylnitril, Methacrylnitril, Maleinsäuredinitril und/oder Fumarsäuredinitril, und Acrylamid.

Besonders bevorzugte Monomere B sind Styrol, $\alpha$-Methylstyrol, o- oder p-Vinyltoluol, p-Acetoxystyrol, p-Bromstyrol, p-tert.-Butylstyrol, o-, m- oder p-Chlorstyrol, Methylmethacrylat, tert.-Butylacrylat, tert.-Butylmethacrylat, Ethylmethacrylat, Isobutylmethacrylat, n-Hexylacrylat, Cyclohexylmethacrylat, aber beispielsweise auch tert.-Butylvinylether oder Cyclohexylvinylether.

Styrol, tert.-Butylmethacrylat, Methylmethacrylat oder Mischungen daraus sind insbesondere bevorzugt als Monomer B.

Vorzugsweise umfasst die Mischung A 39 - 47 Gew.-% wenigstens eines ethylenisch ungesättigten Monomeren B, welches sich von dem Monomer A unterscheidet, ganz besonders bevorzugt 42 - 46 Gew.-% wenigstens eines ethylenisch ungesättigten Monomeren B, welches sich von Monomer A unterscheidet und insbesondere 43 Gew.-% wenigstens eines ethylenisch ungesättigten Monomeren B, welches sich von Monomer A unterscheidet.

Als Monomere C kommen alle ethylenisch ungesättigten Verbindungen in Betracht, welche wenigstens eine Säuregruppe (Protonendonator), wie beispielsweise eine Sulfonsäure-, Phosphonsäure oder Carbonsäuregruppe aufweisen, wie beispielsweise Vinylsulfonsäure, Allylsulfonsäure, Styrolsulfonsäure, 2-Acrylamidomethylpropansulfonsäure, Vinylphosphonsäure, Allylphosphonsäure, Styrolphosphonsäure und 2-Acrylamido-2-Methylpropanphosphonsäure. Vorteilhaft handelt es sich jedoch bei den Monomeren C um $\alpha,\beta$-monoethylenisch ungesättigte, insbesondere $C_3$- bis $C_6$-, bevorzugt $C_3$- oder $C_4$-Mono- oder Dicarbonsäuren wie beispielsweise Acrylsäure, Methacrylsäure, Ethylacrylsäure, Itaconsäure, Allylessigsäure, Crotonsäure, Vinylessigsäure, Fumarsäure, Maleinsäure, 2-Methylmaleinsäure. Die Monomeren C umfassen aber auch die Anhydride entsprechender $\alpha,\beta$-monoethylenisch ungesättigter Dicarbonsäuren, wie beispielsweise Maleinsäureanhydrid oder 2-Methylmaleinsäureanhydrid.

Bevorzugt ist das Monomer C ausgewählt aus der Gruppe umfassend Acrylsäure, Methacrylsäure, Crotonsäure, Fumarsäure, Maleinsäure, Maleinsäureanhydrid, 2-Methylmaleinsäure und Itaconsäure, wobei Acrylsäure, Methacrylsäure und/oder Itaconsäure besonders bevorzugt sind. Selbstverständlich umfassen die Monomeren C auch die voll- oder teilneutralisierten wasserlöslichen Salze, insbesondere die Alkalimetall- oder Ammoniumsalze, der vorgenannten Säuren.

Besonders bevorzugt ist Acrylsäure als Monomer C.

Vorzugsweise umfasst die Mischung A 1 - 5 Gew.-% wenigstens eines säuregruppenhaltigen ethylenisch ungesättigten Monomeren C, ganz besonders bevorzugt 1,5 - 5 Gew.-% wenigstens eines säuregruppenhaltigen ethylenisch ungesättigten Monomeren C und insbesondere 2 Gew.-% wenigstens eines säuregruppenhaltigen ethylenisch ungesättigten Monomeren C.

Die Gefrier-Auftau-stabilen, wässrigen Dispersionen können so hergestellt werden, dass man die Monomere A bis C nach dem Verfahren der radikalischen wässrigen Emulsionspolymerisation in Anwesenheit der erfindungsgemäß zu verwendenden Saccharidverbindung S polymerisiert. Die Emulsionspolymerisationstemperatur beträgt in der Regel 30 bis 95 °C, vorzugsweise 75 bis 90 °C. Das Polymerisationsmedium kann sowohl nur aus Wasser, als auch aus Mischungen aus Wasser und damit mischbaren Flüssigkeiten wie Methanol bestehen. Vorzugsweise wird nur Wasser verwendet. Die Emulsionspolymerisation kann sowohl als Batchprozess als auch in Form eines Zulaufverfahrens, einschließlich Stufen- oder Gradientenfahrweise, durchgeführt werden. Bevorzugt ist das Zulaufverfahren, bei dem man einen Teil des Polymerisationsansatzes vorlegt, auf die Polymerisationstemperatur erhitzt, anpolymerisiert und anschließend den Rest des Polymerisationsansatzes, üblicherweise über mehrere räumlich getrennte Zuläufe, von denen einer oder mehrere die Monomeren beispielsweise in reiner Form enthalten, kontinuierlich, stufenweise oder unter Überlagerung eines Konzentrationsgefälles unter Aufrechterhaltung der Polymerisation der Polymerisationszone zuführt. Aufgrund der hohen Löslichkeit der erfindungsgemäß verwendeten Saccharidverbindung S in Wasser, lässt sich das Zulaufverfahren dadurch besonders einfach gestalten, dass man die Gesamtmenge der zu verwendenden Saccharidverbindung S in einer wässrigen Vorlage in gelöster Form vorlegt; ein Vorgelatinisieren ist nicht erforderlich. D. h. die bei der partiellen Hydrolyse der Ausgangsstärke anfallende wässrige Lösung kann, nachdem die Hydrolyse gestoppt wurde, z. B. durch Neutralisation der katalytisch wirkenden Säure und Abkühlen, unmittelbar für die wässrige Emulsionspolymerisation weiterverwendet werden.

Die durch Emulsionspolymerisation zugänglichen erfindungsgemäßen, wässrigen Dispersionen weisen üblicherweise einen Feststoffgehalt von > 10 und < 70 Gew.-%, häufig > 20 und < 65 Gew.-% und oft > 25 und < 60 Gew.-%, jeweils bezogen auf die wässrige Polymerisatdispersion, auf.

Im Rahmen dieser Schrift wird unter einer Saccharidverbindung S Maltodextrin verstanden.

Die Herstellung der Saccharidverbindung S (verzuckerte Stärke) ist allgemein bekannt und u. a. in Günther Tegge, Stärke und Stärkederivate, Behr's Verlag, Hamburg 1984, S. 173 und S. 220 ff sowie in der EP-A 441 197 beschrieben.

Die erfindungsgemäß zu verwendende Saccharidverbindung S ist normalerweise bei Raumtemperatur in Wasser vollständig löslich, wobei die Löslichkeitsgrenze in der Regel oberhalb von 50 Gew.-% liegt, was sich für die Herstellung der erfindungsgemäßen wässrigen Dispersionen als besonders vorteilhaft erweist.

Es hat sich ferner als günstig erwiesen, wenn die erfindungsgemäß zu verwendenden Saccharide S eine Unheitlichkeit U (definiert als Verhältnis von gewichtsmittlerem Molekulargewicht $M_w$ zu zahlenmittlerem Molekulargewicht $M_n$; U charakterisiert die Molekulargewichtsverteilung) im Bereich von 6 bis 12 aufweisen. Besonders vorteilhaft beträgt U 7 bis 11 und ganz besonders günstig ist ein U von 8 bis 10.

Ferner ist es von Vorteil, wenn der Gewichtsanteil der erfindungsgemäß zu verwendendeten Saccharidverbindung S, der ein Molekulargewicht unterhalb von 1000 g/mol aufweist, wenigstens 10 Gew.-%, jedoch nicht mehr als 70 Gew.-% beträgt. Besonders bevorzugt liegt dieser Gewichtsanteil im Bereich von 20 bis 40 Gew.-%.

Als Ausgangsstärken zur Herstellung der erfindungsgemäß zu verwendenden Saccharidverbindung S sind prinzipiell alle nativen Stärken wie Getreidestärken (z.B. Mais, Weizen, Reis oder Hirse), Knollen- und Wurzelstärken (z.B. Kartoffeln, Tapiokawurzeln oder Arrowroot) oder Sagostärken geeignet.

Ein wesentlicher Vorzug der Saccharidverbindung S ist, dass es hinsichtlich ihrer Anwendung, abgesehen von der in einfachster Weise durchzuführenden partiellen Hydrolyse der Ausgangsstärke zu ihrer Herstellung, keiner weiteren chemischen Modifizierung bedarf. Selbstverständlich können sie aber auch in z. B. durch Veretherung oder Veresterung chemisch modifizierter Form erfindungsgemäß angewendet werden. Diese chemische Modifizierung kann auch bereits an der Ausgangsstärke vor deren Abbau durchgeführt worden sein. Veresterungen sind sowohl mit anorganischen als auch mit organischen Säuren, deren Anhydriden oder Chloriden möglich. Von besonderem Interesse sind phosphatierte und acetylierte abgebaute Stärken. Die gängigste Methode zur Veretherung ist die Behandlung mit organischen Halogenverbindungen, Epoxiden oder Sulfaten in wässriger alkalischer Lösung. Besonders geeignete Ether sind Alkylether, Hydroxyalkylether, Carboxyalkylether und Allylether. Ferner kommen auch Umsetzungsprodukte mit 2,3-Epoxipropyltrimethylammoniumchlorid in Betracht.

Eine chemisch nicht modifizierte Saccharidverbindung S ist bevorzugt.

Die Saccharidverbindung S weist ein gewichtsmittleres Molekulargewicht von 15000 - 30000 g/mol auf. Dabei erfolgt die Bestimmung des gewichtsmittleren Molekulargewichts mittels der dem Fachmann geläufigen Gelpermeationschromatographie mit definierten Standards.

Bevorzugt ist, wenn die Saccharidverbindung S eine Löslichkeit von > 10 g, vorteilhaft > 50 g und insbesondere vorteilhaft > 100 g pro Liter entionisiertem Wasser bei 20 °C und Atmosphärendruck aufweist. Es sind jedoch auch Ausführungsformen mit umfasst, deren Saccharidverbindung S eine Löslichkeit < 10 g pro Liter entionisiertem Wasser bei 20 °C und Atmosphärendruck aufweist. Abhängig von der Menge dieser eingesetzten Saccharidverbindungen S, können diese dann auch in Form ihrer wässrigen Suspension vorliegen. Wird eine Saccharidverbindung S in Art und Menge so eingesetzt, dass sie in wässriger Suspension vorliegen, so ist es vorteilhaft, wenn die in wässrigem Medium suspendierten Partikel der Saccharidverbindung S einen mittleren Teilchendurchmesser $\leq 5\ \mu m$, bevorzugt $\leq 3\ \mu m$ und insbesondere bevorzugt $\leq 1\ \mu m$ aufweisen. Die Bestimmung der mittleren Teilchendurchmesser erfolgt über die Methode der quasielastischen Lichtstreuung (ISO-Norm 13 321).

Die Gesamtmenge der Saccharidverbindung S kann dem wässrigen Polymerisationsmedium (Monomere A bis C, Wasser und gegebenenfalls Initiator) vor, während oder nach der Emulsionspolymerisation der Monomeren A bis C der Emulsionspolymerisation der wässrigen Dispersion des Polymerisats P zugegeben werden. Selbstverständlich ist es auch möglich, lediglich eine Teilmenge der Saccharidverbindung S dem wässrigen Polymerisationsmedium vor oder während der Emulsionspolymerisation der Monomeren A bis C und die verbleibende Restmenge nach Beendigung der Emulsionspolymerisation der wässrigen Dispersion des Polymerisats P zuzugeben. Wird die eine Teil- oder die Gesamtmenge der Saccharidverbindung S vor oder während der Emulsionspolymerisation der Monomeren A bis C zugegeben, kann diese in der Regel die Funktion des Schutzkolloids übernehmen, wodurch die Menge anderer Schutzkolloide und/oder Emulgatoren reduziert bzw. auf diese gegebenenfalls vollständig verzichtet werden kann. Vorteilhafterweise können daher auch nur geringe Mengen an Monomer C eingesetzt werden, da diese ebenfalls als Schutzkolloid in polymerer Form fungieren können.

Das Verfahren zur Herstellung einer Gefrier-Aufbau-stabilen, wässrigen Dispersion umfasst den Schritt des Bereitstellens von wasserlöslichen Lösungsmitteln und/oder Wasser W. Bevorzugte wasserlösliche Lösungsmittel sind Alkohole, wie zum Beispiel Methanol oder Ethanol. Dabei steht W für das wasserlösliche Lösungsmittel, für das Wasser oder für beide.

Das Verfahren zur Herstellung einer Gefrier-Auftau-stabilen, wässrigen Dispersion umfasst den Schritt des Bereitstellens von 0,1 - 2 Gew.-% mindestens eines Polymerisationsinitiators I, bezogen auf die Menge der zu polymerisierenden Monomer A bis C. Vorteilhafterweise werden 0,12 bis 0,18 Gew.-% mindestens eines Polymerisationsinitiators I bereitgestellt.

Als Polymerisationsinitiatoren kommen alle diejenigen in Betracht, die in der Lage sind, eine radikalische wässrige Polymerisation, insbesondere eine Emulsionspolymerisation, auszulösen. Es kann sich dabei sowohl um Peroxide, z.B. Alkalimetallperoxidisulfate oder $H_2O_2$, als auch um Azoverbindungen handeln.

Geeignet sind auch kombinierte Systeme, die aus wenigstens einem organischen Reduktionsmittel und wenigstens einem Peroxid und/oder Hydroperoxid zusammengesetzt sind, z. B. tert.-Butylhydroperoxid und das Natriummetallsalz der Hydroxymethansulfinsäure oder Wasserstoffperoxid und Ascorbinsäure. Ferner eignen sich kombinierte Systeme, die darüber hinaus eine geringe Menge einer im Polymerisationsmedium löslichen Metallverbindung, deren metallische Komponente in mehreren Wertigkeitsstufen auftreten kann, enthalten, z. B. Ascorbinsäure/Eisen(II)sulfat/Wasserstoffperoxid, wobei anstelle von Ascorbinsäure auch häufig das Natriummetallsalz der Hydroxymethansulfinsäure, Natriumsulfit, Natriumhydrogensulfit oder Natriummetallbisulfit und anstelle von Wasserstoffperoxid tert.-Butylhydroperoxid oder Alkalimetallperoxidisulfate und/oder Ammoniumperoxidisulfate angewendet werden. Bei den kombinierten Systemen kann es zweckmäßig sein, die Saccharidverbindung S als reduzierende Komponente zu verwenden.

In der Regel beträgt die Menge der eingesetzten radikalischen Initiatorsysteme, bezogen auf die Gesamtmenge der zu polymerisierenden Monomeren 0,1 bis 2 Gew.-%.

Besonders bevorzugt werden Ammonium- und/oder Alkalimetallperoxidisulfate für sich oder als Bestandteil kombinierter Systeme als Polymerisationsinitiator I eingesetzt. Besonders bevorzugt wird Natriumperoxidisulfat verwendet.

Die Art und Weise, in der der Polymerisationsinitiator I im Verlauf der erfindungsgemäßen wässrigen Emulsionspolymerisation dem Polymerisationsgefäß zugegeben wird, ist eher von untergeordneter Bedeutung. Er kann sowohl vollständig in das Polymerisationsgefäß vorgelegt, als auch nach Maßgabe seines Verbrauchs im Verlauf der wässrigen Emulsionspolymerisation kontinuierlich oder stufenweise eingesetzt werden. Im Einzelnen hängt dies in an sich dem Durchschnittsfachmann bekannter Weise sowohl von der chemischen Natur des Initiatorsystems als auch von der Polymerisationstemperatur ab. Vorzugsweise wird ein Teil vorgelegt und der Rest nach Maßgabe des Verbrauchs der Polymerisationszone zugeführt.

Selbstverständlich kann die (radikalische) wässrige Emulsionspolymerisation auch unter erhöhtem oder reduziertem Druck erfolgen.

Bevorzugt wird ein erfindungsgemäßes Verfahren zur Herstellung einer Dispersion umfassend die Schritte:

a) Bereitstellung einer Mischung A bestehend aus

- 20 - 79,5 Gew.-% wenigstens eines Esters aus ethylenisch ungesättigten Monomeren A,

- 20 - 79,5 Gew.-% wenigstens eines ethylenisch ungesättigten Monomeren B, welches sich von Monomer A unterscheidet,

- 0,5 - 5 Gew.-% wenigstens eines säuregruppenhaltigen ethylenisch ungesättigten Monomeren C, wobei die Gesamtmenge der Monomere A bis C 100 Gew.-% ergibt,

b) Bereitstellen von 20 - 55 Gew.-% mindestens einer Saccharidverbindung S, bezogen auf die Menge der zu polymerisierenden Monomere A bis C, wobei die Saccharidverbindung S Maltodextrin ist und DE-Werte von 3 - 20 und ein gewichtsmittleres Molekulargewicht von 15000 - 30000 g/mol aufweist,

c) Bereitstellen von 20 - 150 Gew.-% wasserlöslichen Lösungsmitteln und/oder Wasser W, bezogen auf die Menge der zu polymerisierenden Monomere A bis C,

d) Bereitstellen von 0,1 - 2 Gew.-% mindestens einem Polymerisationsinitiator I, bezogen auf die Menge der zu polymerisierenden Monomere A bis C,

e) Polymerisieren der Monomeren A bis C in Gegenwart von S, W und I zu dem Polymerisat P, wobei die wässrige Dispersion mindestens einem Gefrier- und Auftauprozess ausgesetzt wird, wobei die Dispersion frei ist von Gefrier-Auftau-stabilisierenden Additiven und wobei Gefrier-Auftau-stabilisierende Additive anionische, kationische oder nichtionische Emulgatoren sind.

Insbesondere bevorzugt wird ein erfindungsgemäßes Verfahren zur Herstellung einer Dispersion bestehend aus den Schritten:

a) Bereitstellung einer Mischung A bestehend aus

- 20 - 79,5 Gew.-% wenigstens eines Esters aus ethylenisch ungesättigten Monomeren A,

- 20 - 79,5 Gew.-% wenigstens eines ethylenisch ungesättigten Monomeren B, welches sich von Monomer A unterscheidet,

- 0,5 - 5 Gew.-% wenigstens eines säuregruppenhaltigen ethylenisch ungesättigten Monomeren C, wobei die Gesamtmenge der Monomere A bis C 100 Gew.-% ergibt,

b) Bereitstellen von 35 - 55 Gew.-% mindestens einer Saccharidverbindung S, bezogen auf die Menge der zu polymerisierenden Monomere A bis C, wobei die Saccharidverbindung S Maltodextrin ist und DE-Werte von 3 - 20 und ein gewichtsmittleres Molekulargewicht von 15000 - 30000 g/mol aufweist,

c) Bereitstellen von 20 - 150 Gew.-% wasserlöslichen Lösungsmitteln und/oder Wasser W, bezogen auf die Menge der zu polymerisierenden Monomere A bis C,

d) Bereitstellen von 0,1 - 2 Gew.-% mindestens einem Polymerisationsinitiator I, bezogen auf die Menge der zu polymerisierenden Monomere A bis C,

e) Polymerisieren der Monomeren A bis C in Gegenwart von S, W und I zu dem Polymerisat P, wobei die wässrige Dispersion mindestens einem Gefrier- und Auftauprozess ausgesetzt wird, wobei die Dispersion frei ist von Gefrier-Auftau-stabilisierenden Additiven und wobei Gefrier-Auftau-stabilisierende Additive anionische, kationische oder nichtionische Emulgatoren sind.

Die Dispersion des erfindungsgemäßen Verfahrens ist frei von Gefrier-Auftau-stabilisierenden Additiven, wobei Gefrier-Auftau-stabilisierenden Additive anionische, kationische oder nichtanionische Emulgatoren sind.

Die in dem erfindungsgemäßen Verfahren verwendete Saccharidverbindung S kann als einziges Dispergiermittel angewendet werden. Daher kann auf weitere Gefrier-Auftau-stabilisierende Additive verzichtet werden.

Als Gefrier-Auftau-stabilisierende Additive sind beispielsweise die ansonsten als Dispergiermittel üblicherweise eingesetzten Schutzkolloide und Emulgatoren bekannt. Eine ausführliche Beschreibung geeigneter Schutzkolloide findet sich in Houben-Weyl, Methoden der organischen Chemie, Band XIV/1, Makromolekulare Stoffe, Georg-Thieme-Verlag, Stuttgart, 1961, S. 411 bis 420. Gefrier-Auftau-stabilisierende Additive sind sowohl anionische, kationische als auch nichtionische Emulgatoren. Gebräuchliche Gefrier-Auftau-stabilisierende Additive sind z. B. ethoxylierte Fettalkohole (EO-Grad: 3 bis 50, Alkylrest: $C_8$ bis $C_{36}$), ethoxylierte Mono-, Di- und Tri-Alkylphenole (EO-Grad: 3 bis 50, Alkylrest: $C_4$ bis $C_9$), Alkalimetallsalze von Dialkylestern der Sulfobernsteinsäure sowie Alkali- und Ammoniumsalze von Alkylsulfaten (Alkylrest: $C_8$ bis $C_{12}$), von ethoxylierten Alkanolen (EO-Grad: 4 bis 30, Alkylrest: $C_{12}$ bis $C_{18}$), von ethoxylierten Alkylphenolen (EO-Grad: 3 bis 50, Alkylrest: $C_4$ bis $C_9$), von Alkylsulfonsäuren (Alkylrest: $C_{12}$ bis $C_{18}$) und von Alkylarylsulfonsäuren (Alkylrest: $C_9$ bis $C_{18}$). Weitere geeignete Emulgatoren finden sich in Houben-Weyl, Methoden der organischen Chemie, Band XIV/1, Makromolekulare Stoffe, Georg Thieme Verlag, Stuttgart, 1961, Seiten 192 bis 208. Als weitere Gefrier-Auftau-stabilisierende Additive, insbesondere in Formulierungen, sind dem Fachmann Glycole, wie zum Beispiel Diethylenglycol, Harnstoffe oder Glycerin bekannt. Bevorzugt enthält die Dispersion keine der vorstehend genannten Additive.

Im erfindungsgemäßen Verfahren ist die Saccharidverbindung S Maltodextrin. Bei dem Maltodextrin kann es sich um eine Maltodextrinlösung oder um sprühgetrocknetes Maltodextrin handeln.

Die im Rahmen der vorliegenden Erfindung verwendeten Maltodextrine weisen DE-Werte im Bereich von 3 bis 20 und gewichtsmittlere Molekulargewichte von 15000 bis 30000 g/mol auf. Herstellungsbedingt fallen diese Produkte in Form wässriger Lösungen an und werden daher in der Regel auch als solche in den Handel gebracht. Geeignete Lösungen von Maltodextrinen weisen Feststoffgehalte von 50 bis 70 Gew.-% auf. Maltodextrine sind jedoch auch in sprühgetrockneter Form als Pulver erhältlich.

Bevorzugt weist die Saccharidverbindung S einen DE-Wert von 15 bis 20 auf.

Der DE-Wert charakterisiert das Reduktionsvermögen bezogen auf das Reduktionsvermögen von wasserfreier Dextrose und wird nach DIN 10308 Ausgabe 5.71, des Normenausschusses Lebensmittel und landwirtschaftliche Produkte, bestimmt (vgl. auch Günther Tegge, Stärke und Stärkederivate, Behr's Verlag, Hamburg 1984, S. 305).

Bevorzugt wird ein erfindungsgemäßes Verfahren, bei dem die Saccharidverbindung S als 50 Gew.-% Lösung einen pH-Wert in einem Wert von 4 bis 5 aufweist.

Das Verfahren zur Herstellung einer Gefrier-Auftau-stabilen, wässrigen Dispersion kann kontinuierlich, semi-kontinuierlich oder batchweise durchgeführt werden.

Bevorzugt wird ein erfindungsgemäßes Verfahren, bei dem das Verfahren semi-kontinuierlich durchgeführt wird.

Zur Herstellung des Polymerisats P in Form ihrer wässrigen Polymerisatdispersion kann die Gesamtmenge der Monomeren A bis C im wässrigen Reaktionsmedium vor Initiierung der Polymerisationsreaktion vorgelegt werden.

Es ist aber auch möglich, gegebenenfalls lediglich eine Teilmenge der Monomeren A bis C im wässrigen Reaktionsmedium vor Initiierung der Polymerisationsreaktion vorzulegen und dann nach Initiierung der Polymerisation unter Polymerisationsbedingungen während der radikalischen Emulsionspolymerisation die Gesamtmenge bzw. die gegebenenfalls verbliebene Restmenge nach Maßgabe des Verbrauchs kontinuierlich mit gleichbleibenden oder sich ändernden Mengenströmen oder diskontinuierlich zuzugeben (semi-kontinuierliches Verfahren). Dabei kann die Dosierung der Monomeren A bis C als separate Einzelströme, als inhomogene oder homogene (Teil)gemische oder als Monomerenemulsion erfolgen. Mit Vorteil werden die Monomeren A bis C in Form eines Monomerengemisches, insbesondere in Form einer wässrigen Monomerenemulsion dosiert.

Bevorzugt erfolgt in dem Verfahren in einem Schritt f) die Zugabe von 0,05 bis 0,20 Gew.-% $H_2O_2$, bezogen auf die Menge der zu polymerisierenden Monomere A bis C, nach Schritt e).

Bevorzugt erfolgt in dem Verfahren in Schritt f) die Zugabe von 0,05 bis 0,02 Gew.-% Ascorbinsäure, bezogen auf die Menge der zu polymerisierenden Monomere A bis C, und 1,5 - 4 Gew.-% Wasser W1, bezogen auf die Menge der zu polymerisierenden Monomere A bis C. Das Wasser W1 kann zusätzlich zu dem Wasser W in der Dispersion vorhanden sein.

Vorteilhafterweise kann in dem Verfahren in Schritt f) die Zugabe von 0,05 - 0,02 Gew.-% $H_2O_2$ und die Zugabe

von 0,05 - 0,02 Gew.-% Ascorbinsäure und 1,5 - 4 Gew.-% Wasser W1 (jeweils bezogen auf die Menge der zu polymerisierenden Monomere A bis C) erfolgen. Damit kann vorteilhafterweise eine chemische Desodorierung erfolgen. Insbesondere kann die chemische Desodorierung in einem Temperaturbereich von 60 bis 100°C, insbesondere in einem Bereich von 80 bis 95°C, erfolgen.

Bevorzugt wird ein erfindungsgemäßes Verfahren, wobei 5 - 15 Gew.-% der Gesamtmenge der Mischung A, 4 - 8 Gew.-% der Gesamtmenge des Polymerisationsinitiators I und 25 - 35 Gew.-% der Gesamtmenge des Wassers W bereitgestellt und polymerisiert werden, und innerhalb von 6 h der Rest von der Mischung A, des Polymerisationsinitiators I und des Wassers W hinzugegeben werden. Vorteilhafterweise wird innerhalb von 4h, insbesondere innerhalb von 2h, der Rest der Mischung A, des Polymerisationsinitiators I und des Wassers W, hinzugegeben.

Bei dem erfindungsgemäßen Verfahren wird die wässrige Dispersion mindestens einem Gefrier- und Auftauprozess ausgesetzt. Vorzugsweise wird die wässrige Dispersion mindestens drei Auftau- und Gefrierprozessen ausgesetzt. Aufgrund dieses Schrittes ist es möglich, fehlerhafte Chargen beim Herstellungsprozess im Vorfeld auszumustern, so dass Gefrier-Auftau-stabile, wässrige Dispersionen generiert werden können, die über eine entsprechende Langzeitstabilität verfügen. Zudem ermöglicht eine Dispersion, die nicht nach mindestens einem Gefrier- und Auftauprozess koaguliert, die Bereitstellung einer Formulierung, die ebenfalls nicht nach einem Gefrier- und Auftauprozess koaguliert. Daher können solche Dispersionen oder Formulierungen in kalte Klimazonen geliefert und auch dort gelagert werden, ohne dass sich die Eigenschaften verschlechtern. Dies kann zu reduzierten Kosten führen, da entsprechende Thermotransporte und temperierte Lagerhallen nicht notwendig sind.

Vorzugsweise wird die nach dem erfindungsgemäßen Verfahren erhältliche wässrige Dispersion mindestens einem Gefrier- und Auftauprozess ausgesetzt, bei dem die wässrige Dispersion auf eine Temperatur in einem Bereich von 0 bis -40°C für 30 min bis 48 h gehalten wird und danach bei einer Temperatur von 1 - 50°C für 30 min bis 48 h wieder aufgetaut wird.

Ein weiterer Gegenstand der Erfindung ist eine Gefrier-Auftau-stabile, wässrige Dispersion, erhältlich nach dem erfindungsgemäßen Verfahren.

Die erfindungsgemäße wässrige Dispersion ist außerordentlich vielseitig verwendbar. Sie eignet sich insbesondere als Klebstoff, als Bindemittel für Teppichrücken-Beschichtungen, als Bindemittel für Papierstreichmassen, als Zusatz in mineralischen, z. B. hydraulisch abbindenden, Bindemitteln, als Schlichtemittel für Fasern, als Bindemittel für feinteilige mineralische und/oder organische Materialien zur Herstellung von Formkörpern (z. B. Spanplatten), insbesondere für den Metallguss oder Anstrichfarben und -putzen, als Verdicker sowie als Bindemittel für die Herstellung von Schleifmitteln auf der Basis untereinander und/oder auf einem Träger gebundener feinteiliger Schleifpartikeln. Von besonderem Vorteil sind hierbei das erhöhte Filmbildungsvermögen der erfindungsgemäßen wässrigen Dispersion, sowie die erhöhte Reißfestigkeit der beim Verfilmen resultierenden Filme.

Die erfindungsgemäße wässrige Dispersion eignet sich insbesondere als Bindemittel für Gießereisande zur Herstellung von Kernen und Formen für den Metallguss, zur Herstellung von Kokillendämmplatten auf der Basis von feinteiligem Papier und gegebenenfalls feinteiligen mineralischen Materialien sowie zur Herstellung von Schleifmitteln auf der Basis von untereinander und/oder auf einem Träger mittels eines Bindemittels gebundenen feinteiligen Schleifpartikeln. Geeigneter Gießereisand besteht in der Regel aus körnigem Quarzsand, in bestimmten Fällen aber auch aus Chromit-, Zirkon- oder Olivinsand. Daneben finden auch Schamotte-, Magnesit-, Sillimanit- oder Korundmaterialien Verwendung. Der mittlere Korndurchmesser (Größtdurchmesser) beträgt normalerweise 0,05 bis 0,6 mm. Die Überführung der Gießereisande in Gießereiformkörper erfolgt im Allgemeinen so, dass man die Sande mit den erfindungsgemäßen wässrigen Dispersionen unter Einstellung des gewünschten Bindemittelgehalts, in der Regel (trocken gerechnet) 0,1 bis 10, vorzugsweise 0,1 bis 5 Gew.-%, bezogen auf die Menge Gießereisand, mischt, die Mischung (hier Mörtel genannt) in eine Form (Negativ) gibt, durch Ausübung von Druck gegebenenfalls verdichtet und anschließend härtet. Bemerkenswert ist, dass bei Verwendung der erfindungsgemäßen Dispersionen, die üblicherweise für diesen Zweck mit einem Gesamtfeststoffgehalt von 40 bis 60 Gew.-% angewendet werden, der Härtungsprozess nicht notwendigerweise die Anwendung erhöhter Temperaturen (normalerweise 50 bis 250°C) erfordert, sondern auch durch sich selbst überlassen bei Raumtemperatur mit befriedigender Geschwindigkeit ein Durchhärten erfolgt. In anwendungstechnisch besonders geschickter Weise kann das Durchhärten auch dadurch erzielt werden, dass man die auszuhärtende Masse der Einwirkung von Mikrowellen aussetzt.

Die erfindungsgemäße Dispersion eignet sich besonders gut zur Herstellung von Schleifmitteln auf der Basis von untereinander und/oder auf einem Träger mittels eines Bindemittels gebundenen feinteiligen Schleifpartikeln. Als feinteilige Schleifpartikel kommen insbesondere in Betracht: Schmelz- oder Sinter-Korund, Zirkonkorund, Siliciumcarbid und Schmirgel. Als Trägermaterial eignen sich u. a. flexible Unterlagen wie z. B. Papier, Vulkanfiber, Gewebe, Gewirke, Vliesstoffe auf Basis natürlicher und/oder synthetischer Fasern, Kunststofffolien oder Metallfolien. In der Regel wird zur Herstellung derartiger Schleifmittel auf den Träger zunächst eine so genannte Grundbinderschicht aufgetragen, in die im nassen Zustand die Schleifpartikel eingetragen werden. Nach einer ersten Fixierung des Schleifkorns durch Trocknen (Härten) wird zwecks besserer Einbettung und Befestigung des Korns in der Regel eine zweite, so genannte Deckbinderschicht aufgetragen. Prinzipiell können Grund- und Deckbinderschicht aus verschiedenen Bindemitteln bestehen.

Dabei kann die wässrige Dispersion mindestens eine Deckschicht darstellen. Typische Anforderungen, die an zur Herstellung von Schleifmitteln geeignete Bindemittel gestellt werden, sind beispielsweise:

- gute Haftung, sowohl auf der Unterlage als auch am Schleifpartikel
- rasch und schonend härtbar
- möglichst geringe Beanspruchung des Trägermaterials
- hohe Wärmestandfestigkeit
- erhöhte Fließfähigkeit beim Auftrag
- gute mechanische Eigenschaften beim Schleifvorgang (harte, zähe Verfilmungen).

Diesen Anforderungen wird die erfindungsgemäße Dispersion in voll befriedigender Weise gerecht. So erfordert das Härten bei ihrer Verwendung nicht notwendigerweise erhöhte Temperaturen, sondern kann bei Raumtemperatur und besonders vorteilhaft unter Mikrowelleneinwirkung erfolgen. Dies ist insbesondere schonend für das Trägermaterial und vermeidet einen extremen Wasserentzug, wodurch komplizierte Regenerierungen des Trägermaterials in Klimazonen entbehrlich sind.

Das günstige Fließverhalten der Gefrier-Auftau-stabilen, wässrigen Dispersion erweist sich insbesondere dann als vorteilhaft, wenn die Dispersion als Deckschicht verwendet wird, da es das Eindringen des Bindemittels in die Schleifkorn-Zwischenräume ermöglicht.

Erfindungsgemäß ist die Gefrier-Auftau-stabile, wässrige Dispersion frei von Gefrier-Auftau-stabilisierenden Additiven, wobei Gefrier-Auftau-stabilisierende Additive anionische, kationische oder nichtionische Emulgatoren sind. Die Gefrier-Auftau-stabilisierenden Additive wurden vorstehend bereits genannt.

Ein weiterer Gegenstand der Erfindung betrifft die Verwendung der erfindungsgemäßen Gefrier-Auftau-stabilen, wässrigen Dispersion als Bindemittel für Beschichtungen, Dichtmassen, zementäre Beschichtungen, nicht zementäre Beschichtungen, Klebstoffe und Grundierungen. Als nicht zementäre Beschichtungen sind beispielsweise flexible Dachbeschichtungen, Feuchtraumbeschichtungen oder Spachtelmassen bekannt, als Dichtmassen sind beispielsweise Fugendichtstoffe bekannt und als Klebstoffe sind beispielsweise Montageklebstoffe, Fliesenklebstoffe, Kontaktklebstoffe oder Bodenbelagsklebstoffe bekannt. Grundierungen sind dem Fachmann bekannt und dienen beispielsweise zur Vorbereitung von grob porösen, saugenden und sandenden Untergründen. Als zementäre Beschichtungen sind beispielsweise zementäre Dichtschlämmen, Putze, Mörtel oder Bodenspachtelmassen bekannt.

Besonders bevorzugt ist die Verwendung der erfindungsgemäßen Gefrier-Auftau-stabilen, wässrigen Dispersion als Bindemittel für nicht zementäre Beschichtungen, Klebstoffe und Grundierungen. Bevorzugt sind die Grundierungen auch Gefrier-Auftau-stabil.

Ein weiterer Gegenstand der Erfindung betrifft die Verwendung der erfindungsgemäßen Gefrier-Auftau-stabilen, wässrigen Dispersion als kälte- und/oder hitzebeständiges Bindemittel für Beschichtungen, Dichtmassen, zementäre Beschichtungen, nicht zementäre Beschichtungen, Klebstoffe und Grundierungen. Unter einem kälte- und/oder hitzebeständigen Bindemittel wird ein Bindemittel verstanden, welches bei einem Gefriervorgang erstarrt, vorteilhafterweise bei einer Temperatur von 0 °C bis - 30 °C, und bei einem Auftauvorgang, insbesondere bei einer Temperatur von 0 bis 50 °C nicht koaguliert. Insbesondere koaguliert das Bindemittel nicht in Gegenwart von weiteren Additiven, die bei der Verwendung als Bindemittel anwesend sind.

Besonders bevorzugt ist die Verwendung der erfindungsgemäßen Gefrier-Auftau-stabilen, wässrigen Dispersion als kälte- und/oder hitzebeständiges Bindemittel für nicht zementäre Beschichtungen, Klebstoffe und Grundierungen. Bevorzugt sind die Grundierungen auch Gefrier-Auftau-stabil.

Bei der erfindungsgemäßen Verwendung der erfindungsgemäßen Gefrier-Auftau-stabilen, wässrigen Dispersion können zusätzlich noch übliche, dem Fachmann für die jeweilige Verwendung in Art und Menge geläufigen Hilfs- oder Zusatzstoffe eingesetzt werden.

Bevorzugt können Hilfs- oder Zusatzstoffe ausgewählt werden aus der Gruppe bestehend aus einem Verdicker, einem Biozid, einem Entschäumer, einem Filmbildehilfsmittel, einem Netzmittel, einem wasserlöslichen organischen Lösungsmittel, einem Pigment und einem Füllstoff.

Vorteilhafterweise kommen bei der Verwendung einer Gefrier-Auftau-stabilen, wässrigen Dispersion als Bindemittel keine weiteren Gefrier-Auftau-stabilisierenden Additive vor. Die Gefrier-Auftau-stabilisierenden Additive wurden vorstehend genannt.

Ein weiterer Gegenstand der Erfindung betrifft ein Verfahren zur Herstellung eines Formkörpers aus körnigen und/oder faserförmigen Substraten, wobei eine Gefrier-Auftau-stabile Dispersion erhältlich nach dem erfindungsgemäßen Verfahren oder eine erfindungsgemäße Gefrier-Auftau-stabile, wässrige Dispersion auf das körnige und/oder faserförmige Substrat aufgebracht wird, gegebenenfalls das so behandelte körnige und/oder faserförmige Substrat in Form gebracht wird und anschließend das so erhaltene körnige und/oder faserförmige Substrat einem thermischen Behandlungsschritt bei einer Temperatur ≥ 110 °C unterzogen wird.

Körnige und/oder faserförmige Substrate sind dem Fachmann geläufig. Beispielsweise handelt es sich hierbei um Holzschnitzel, Holzfasern, Cellulosefasern, Textilfasern, Kunststofffasern, Glasfasern, Mineralfasern oder Naturfasern, wie Jute, Flax, Hanf oder Sisal, aber auch Korkschnitzel oder Sand sowie andere organische oder anorganischen natürlich und/oder synthetische körnige und/oder faserförmige Verbindungen, deren längste Ausdehnung im Falle von körnigen Substraten ≤ 10 mm, bevorzugt ≤ 5 mm und insbesondere ≤ 2 mm beträgt. Selbstverständlich soll der Begriff Substrat auch die aus Fasern erhältlichen Faservliese, wie beispielsweise sogenannte mechanische verfestigte, beispielsweise genagelte oder chemisch vorgebundene Faservliese mitumfassen. Insbesondere ist die erfindungsgemäße Gefrier-Auftau-stabile, wässrige Dispersion als Formaldehyd-freies Bindemittel (System) für die vorgenannten Fasern mechanisch verfestigten oder chemisch vorgebundenen Faservliese geeignet.

Dabei können die essentiellen Komponenten der erfindungsgemäßen Dispersion, d. h. die wässrige Dispersion des Polymerisats P und die Saccharidverbindung S, insbesondere in Form ihrer Lösung oder Suspension, vorab des Aufbringens auf das körnige und/oder faserförmige Substrat, homogen gemischt werden. Es ist auch möglich, dass die beiden Komponenten erst unmittelbar vor dem Aufbringen, beispielsweise mit einer statischen und/oder dynamischen Mischeinrichtung mischen. Es ist auch möglich, zuerst die wässrige Dispersion des Polymerisats P und danach die wässrige Lösung oder Suspension der Sacchardverbindung S auf das körnige und/oder faserförmige Substrat aufzubringen, wobei die Mischung auf dem körnigen und/oder faserförmigen Substrat erfolgt. In analoger Weise kann aber zuerst die wässrige Lösung der Suspension der Saccharidverbindung S und danach die wässrige Dispersion des Polymerisats P auf das körnige und/oder faserförmige Substrat aufgebracht werden. Selbstverständlich sollen auch Mischformen des Aufbringens der beiden essentiellen Komponenten umfasst sein.

Die Imprägnierung des körnigen und/oder faserförmigen Substrats kann in der Regel derart erfolgen, dass die Gefrier-Auftau-stabile, wässrige Dispersion gleichmäßig auf die Oberfläche des faserförmigen und/oder körnigen Substrats aufgebracht wird. Dabei wird die Menge an der wässrigen Dispersion so gewählt, dass pro 100 g körnigem und/oder faserförmigem Substrat ≥ 1 g und ≤ 100 g, bevorzugt ≥ 2 g und ≤ 50 g und insbesondere bevorzugt ≥ 5 g und ≤ 30 g Bindemittel (berechnet als Summe der Gesamtmengen von Polymerisat P und Saccharidverbindung S auf Feststoffbasis) eingesetzt werden. Die Imprägnierung des körnigen und/oder faserförmigen Substrats ist dem Fachmann geläufig und erfolgt beispielsweise durch Tränkung oder Besprühen des körnigen und/oder faserförmigen Substrats.

Nach der Imprägnierung kann das körnige und/oder faserförmige Substrat gegebenenfalls in eine gewünschte Form gebracht werden, beispielsweise durch Einbringen in eine beheizbare Presse oder Form. Daran anschließend wird das in Form gebrachte imprägnierte körnige und/oder faserförmige Substrat in einer dem Fachmann geläufigen Art und Weise getrocknet und ausgehärtet.

Häufig erfolgt die Trocknung bzw. Aushärtung des gegebenenfalls in Form gebrachten imprägnierten körnigen und/oder faserförmigen Substrats in zwei Temperaturstufen, wobei die Trocknungsstufe bei einer Temperatur < 100 °C, bevorzugt ≥ 20 °C und ≤ 90 °C und insbesondere bevorzugt ≥ 40 °C und ≤ 80 °C und die Aushärtungsstufe bei einer Temperatur ≥ 110 °C, bevorzugt ≥ 130 °C und ≤ 50 °C und insbesondere bevorzugt ≥ 250 °C und ≤ 220 °C erfolgt.

Selbstverständlich ist es aber auch möglich, dass die Trocknungsstufe und die Aushärtungsstufe der Formkörper in einem Arbeitsschritt, beispielsweise in einer Formpresse erfolgen.

Die nach dem erfindungsgemäßen Verfahren zugänglichen Formkörper weisen vorteilhafte Eigenschaften, insbesondere eine verbesserte Querreißkraft sowie eine deutlich geringere Ger-Dehnung bei 180 °C im Vergleich zu den Formkörpern des Standes der Technik auf.

Insbesondere vorteilhaft eignet sich die Gefrier-Auftau-stabile, wässrige Dispersion gemäß der vorliegenden Erfindung daher zur Herstellung von Faservliesen auf Polyester- und/oder Glasfaserbasis, welche sich ihrerseits insbesondere zur Herstellung von bitumierten Dachbahnen eignen.

Dabei ist die Herstellung von bitumierten Dachbahnen dem Fachmann geläufig und erfolgt insbesondere durch Aufbringen von verflüssigten, gegebenenfalls modifizierten Bitumen auf eine bzw. beide Seiten eines mit der erfindungsgemäßen Dispersion gebundene Polyester- und/oder Glaserfaservlieses.

Ein weiterer Gegenstand der Erfindung ist eine Gefrier-Auftau-stabile Formulierung umfassend die erfindungsgemäße Gefrier-Auftau-stabile Dispersion, mindestens einen Pigmentverteiler, mindestens einen Füllstoff und mindestens einen Verdicker.

Besonders bevorzugt wird eine Gefrier-Auftau-stabile Formulierung, umfassend

- 1 - 99,9 Gew.-% der erfindungsgemäßen Gefrier-Auftau-stabilen, wässrigen Dispersion,
- 0 - 5 Gew.-% mindestens eines Pigmentverteilers,
- 0 - 80 Gew.-% mindestens eines Füllstoffes,
- 0,1 - 10 Gew.-% mindestens eines Verdickers, und
- 0 - 5 Gew.-% mindestens eines Additives,

wobei sich die Gesamtmenge der Komponenten auf 100 Gew.-% summiert.

Insbesondere bevorzugt ist eine Gefrier-Auftau-stabile Formulierung, umfassend

- 5 - 45 Gew.-% der erfindungsgemäßen Gefrier-Auftau-stabilen, wässrigen Dispersion,
- 0,1 - 3 Gew.-% mindestens eines Pigmentverteilers,
- 50 - 75 Gew.-% mindestens eines Füllstoffes,
- 0,1 - 5 Gew.-% mindestens eines Verdickers, und
- 0 - 20 Gew.-% mindestens eines Additives, wobei die Menge inklusive Wasser sein kann,

und wobei sich die Gesamtmenge der Komponenten auf 100 Gew.-% summiert.

Ganz besonders bevorzugt wird eine Gefrier-Auftau-stabile Formulierung, umfassend

- 39,8 - 70 Gew.-% der erfindungsgemäßen Gefrier-Auftau-stabilen, wässrigen Dispersion,
- 0,1 - 5 Gew.-% mindestens eines Pigmentverteilers,
- 20 - 60 Gew.-% mindestens eines Füllstoffes,
- 0,1 - 10 Gew.-% mindestens eines Verdickers, und
- 0 - 20 Gew.-% mindestens eines Additives, wobei die Menge inklusive Wasser sein kann,

und wobei sich die Gesamtmenge der Komponenten auf 100 Gew.-% summiert.

Besonders bevorzugt wird eine Gefrier-Auftau-stabile Formulierung, bestehend aus

- 1 - 99,9 Gew.-% der erfindungsgemäßen Gefrier-Auftau-stabilen, wässrigen Dispersion,
- 0 - 5 Gew.-% mindestens eines Pigmentverteilers,
- 0 - 80 Gew.-% mindestens eines Füllstoffes,
- 0,1 - 10 Gew.-% mindestens eines Verdickers, und
- 0 - 5 Gew.-% mindestens eines Additives,

wobei sich die Gesamtmenge der Komponenten auf 100 Gew.-% summiert.

Insbesondere bevorzugt ist eine Gefrier-Auftau-stabile Formulierung, bestehend aus

- 5 - 45 Gew.-% der erfindungsgemäßen Gefrier-Auftau-stabilen, wässrigen Dispersion,
- 0,1 - 3 Gew.-% mindestens eines Pigmentverteilers,
- 50 - 75 Gew.-% mindestens eines Füllstoffes,
- 0,1 - 5 Gew.-% mindestens eines Verdickers, und
- 0 - 20 Gew.-% mindestens eines Additives, wobei die Menge inklusive Wasser sein kann,

und wobei sich die Gesamtmenge der Komponenten auf 100 Gew.-% summiert.

Ganz besonders bevorzugt wird Gefrier-Auftau-stabile Formulierung, bestehend aus

- 39,8 - 70 Gew.-% der erfindungsgemäßen Gefrier-Auftau-stabilen, wässrigen Dispersion,
- 0,1 - 5 Gew.-% mindestens eines Pigmentverteilers,
- 20 - 60 Gew.-% mindestens eines Füllstoffes,
- 0,1 - 10 Gew.-% mindestens eines Verdickers, und
- 0 - 20 Gew.-% mindestens eines Additives, wobei die Menge inklusive Wasser sein kann,

und wobei sich die Gesamtmenge der Komponenten auf 100 Gew.-% summiert.

In der erfindungsgemäßen Gefrier-Auftau-stabilen Formulierung können zusätzlich noch übliche, dem Fachmann für die jeweilige Verwendung in Art und Menge geläufigen Hilfs- oder Zusatzstoffe mit umfasst sein.

Bevorzugt können Hilfs- oder Zusatzstoffe ausgewählt werden aus der Gruppe bestehend aus einem Biozid, einem Entschäumer, einem Filmbildehilfsmittel, einem Netzmittel, einem wasserlöslichen organischen Lösungsmittel und einem Pigment.

Bevorzugte Biozide sind beispielsweise Chlormethylisothiazolinon, 2-Methyl- bzw. 1,2-Benzisothiazolinon sowie deren Mischungen, wie beispielsweise Acticid® MV oder Acticid® MBS 2550.

Bevorzugte Entschäumer sind beispielsweise Mineralöl- bzw. Silikonölentschäumer und oxyalkylierte Verbindungen, wie beispielsweise Agitan® 282, Agitan® E255, Byk® 93 oder Lumiten® EL.

Bevorzugte Filmbildehilfsmittel sind beispielsweise Testbenzin, Texanol®, Butyldiglykol, Dipropylenglykolmonobutylether (Solvenon® DPnB), Tripropylenglykolmonobutylether (Solvenon® TPnB), Butyldiglykolacetat oder Methyldiglykol.

Bevorzugte Netzmittel sind beispielweise 2-Aminopropanol, Acetylendiole, Polyphosphonate. Emulgatoren wie z.B. Lumiten I-SC können auch als Netzmittel eingesetzt werden und Emulgatoren wie Emulphor FAS 30 oder Lutensol TO 89 können verwendet werden, um die Lagerstabilität (Viskositätsänderung/Phasenseparation) zu verbessern.

EP 3 166 978 B1

Bevorzugte wasserlösliche organische Lösungsmittel sind beispielsweise Methanol, Ethanol, Isopropanol, Aceton.

Bevorzugte Pigmentverteiler sind beispielsweise Polymere auf Basis von Carbonsäuren, wie beispielsweise Pigmentverteiler® NL, Pigmentverteiler® MD20, Dispex® N40 oder Dispex® G40.

Bevorzugte Verdicker sind beispielsweise solche auf Basis von Polyacrylaten, Polyurethanen oder Polysacchariden, wie Borchigel® L75, Tafigel® PUR 40, Viscalex® HV 30, Walocel® MW 40000, Latekoll® D oder Latekoll® DS 6269.

Bevorzugte Füllstoffe bzw. Pigmente (Pigmentverteiler) sind dem Fachmann bekannt und beispielsweise in "Pigment- und Füllstoff-Tabellen", Lückert, (2002) Vincentz Verlag aufgeführt.

Als bevorzugte Füllstoffe und Additive kommen insbesondere Aluminiumsilicate, Quarz, gefällte oder pyrogene Kieselsäure, die hydrophobiert sein kann, Leicht- und Schwerspat, Talcum, Dolomit, Calciumcarbonat sowie farbgebende Pigmente wie Titanweiß, Bleiweiß, Chromgelb, Mennige, Zinkgelb oder Ruß in Betracht sowie Calciumsilikat, Bariumsulfat, Magnesiumcarbonat und Magnesiumsilikat in Betracht.

Als weitere anorganische Füllstoffe eignen sich beispielsweise Füllstoffpartikel aus Andalusit, Silimanit, Kyanit, Mullit, Pyrophylit, Omogolit oder Allophan. Weiterhin geeignet sind Verbindungen auf der Basis von Natriumaluminaten, Silikate, wie z.B. Aluminiumsilikate, Calciumsilikate oder Kieselsäuren (z.B. Aerosil®). Ebenfalls geeignet sind Mineralien wie Kieselerde, Calciumsulfat (Gips), das nicht aus Rauchgasent-schwefelungsanlagen stammt in Form von Anhydrit, Halbhydrat oder Dihydrat, Quarzmehl, Kieselgel, gefälltes oder natürliches Bariumsulfat, Titandioxid, Zeolithe, Leucit, Kalifeldspat, Biotit, die Gruppe der Soro-, Cyclo-, Ino-, Phyllo- und Tectosilikate, die Gruppe der schwer Löslichen Sulfate, wie Gips, Anhydrit oder Schwerspat, sowie Calciummineralien, wie Calcit.

Die genannten anorganischen Materialien können einzeln aber auch im Gemisch eingesetzt werden. Weitere geeignete Materialien sind gefälltes oder natürliches Kaolin, Talkum, Magnesium- oder Aluminiumhydroxid (zur Einstellung der Brand-klasse), Blähgraphit, Schichtsilikate, Zinkoxid sowie Zirkoniumsalze. Mittels Zugabe von Leichtfüllstoffen - keramischen Mikrohohlkugeln, Glashohlkugeln, Schaumglaskugeln, expandiertes bzw. nicht expandiertes Polystyrol oder sonstigen Leichtfüllstoffen, wie sie z.B. von der Fa. Omega-Minerals hergestellt werden, lassen sich Parameter wie Dimensionsstabilität und Dichte beeinflussen.

Die Füllstoffpartikel weisen einen x50-Wert für die durchschnittliche Teilchengrößenverteilung von etwa 1 bis 120 $\mu$m, beispielsweise etwa 3 bis 60 oder etwa 60 bis 90 $\mu$m auf, gemessen mit Sympatec® Helos H 0720 in Isopropanol.

Ebenfalls zum Einsatz geeignet sind organische Füllstoffpartikel. Hierzu zählen insbesondere feinvermahlene Kunstoffmehle, wie sie beim Recycling von Kunststoffen anfallen können und Kunststoffmehle, wie sie aus der Feinvermahlung von hochvernetzten elastomeren oder duromeren Polymeren erhältlich sind. Ein Beispiel hierfür ist Gummimehl, wie es beispielsweise durch Feinvermahlung von Autoreifen entsteht. Weitere Füllstoffpartikel sind Kunststofffasern, Schlagzähmodifikatoren, Cellulosefasern oder Glasfasern (z.B. Wollastonit® Marken).

Die Erfindung wird durch die nachstehenden Beispiele näher erläutert.

## Beispiele

### Material und Methoden

Es wurden folgende Komponenten verwendet:

n-Butylacrylat (nBA)
Styrol (S)
Acrylsäure (AS)
2,5 gew.-%-ige wässrige Lösung von Natriumperoxidisulfat (2,5%i.g.NaPS-Lösung) sprühgetrocknetes Maltodextrin aus der enzymatischen Konversion von Maisstärke (C Dry MD01915; C Dry)
Disponil LDBS20 (Natrium-n-Alkyl-(C10-C13)benzolsulfonsäure)
FG (Feststoffgehalt)

## Vergleichsbeispiel 1

Eine Mischung bestehend aus 427,5g Wasser, 100 g sprühgetrocknetes Maltodextrin (DE-Wert 16,5 - 19,9; 20 Gew.-%), 50g Zulauf 1 und 32g Zulauf 2 wurde auf 85 °C erhitzt und 15 min bei dieser Temperatur gehalten. Anschließend wurden unter Aufrechterhalten der 85 °C zeitgleich beginnend die Restmengen der Zuläufe 1 und 2 kontinuierlich (Zulauf 1 innerhalb 2.5h, Zulauf 2 innerhalb von 3h) der Polymerisationszone zugeführt. Anschließend wurde noch eine Stunde (85 °C) nachpolymerisiert.

Zulauf 1:   275g n-Butylacrylat (55 Gew.-%)

215g Styrol (43 Gew.-%)

10g Acrylsäure (2 Gew.-%)

Zulauf 2:   160g 2,5 Gew.-%ige wässrige Lösung von Natriumperoxodisulfat (0.8 Gew.-%)

Anschließend wurde die chemische Desodorierung durchgeführt (85 °C). Dazu wurden 2,2g einer 25%-igen wässrigen Wasserstoffperoxid-Lösung (0,11 Gew.-% Wasserstoffperoxid) zugegeben und 5 min eingerührt. Anschließend wurden 50% eines Zulaufs 3 aus 5,49g einer 9,1 gew.-%igen wässrigen Ascorbinsäurelösung (0,1 Gew.-% Ascorbinsäure) und 2,85g Wasser zugegeben und 10 min eingerührt, gefolgt von der Zugabe der restlichen 50% des Zulaufs 3 und 12,06g Wasser. Anschließend wurde auf Raumtemperatur abgekühlt und filtriert.

**Beispiel 1**

Eine Mischung bestehend aus 462g Wasser, 200 g sprühgetrocknetes Maltodextrin (DE-Wert 16,5 - 19,9; 50 Gew.-%), 40g Zulauf 1 und 25,6g Zulauf 2 wurde auf 85 °C erhitzt und 15 min bei dieser Temperatur gehalten. Anschließend wurden unter Aufrechterhalten der 85 °C zeitgleich beginnend die Restmengen der Zuläufe 1 und 2 kontinuierlich (Zulauf 1 innerhalb 2.5h, Zulauf 2 innerhalb von 3h) der Polymerisationszone zugeführt. Anschließend wurde noch eine Stunde (85 °C) nachpolymerisiert.

Zulauf 1:   220g n-Butylacrylat (55 Gew.-%)

172g Styrol (43 Gew.-%)

8g Acrylsäure (2 Gew.-%)

Zulauf 2:   128g 2,5 Gew.-%ige wässrige Lösung von Natriumperoxodisulfat (0.8 Gew.-%)

Anschließend wurde die chemische Desodorierung durchgeführt (85 °C). Dazu wurde 1,76g einer 25%-igen wässrige Wasserstoffperoxid-Lösung (0,11 Gew.-% Wasserstoffperoxid) zugegeben und 5 min eingerührt. Anschließend wurden 50% eines Zulaufs 3 aus 4,4g einer 9,1 gew.-%igen wässrigen Ascorbinsäurelösung (0,1 Gew.-% Ascorbinsäure) und 2,28g Wasser zugegeben und 10 min eingerührt, gefolgt von der Zugabe der restlichen 50% des Zulaufs 3 und 9,64g Wasser. Anschließend wurde auf Raumtemperatur abgekühlt und filtriert.

**Vergleichsbeispiel 2**

Eine Mischung bestehend aus 200g Wasser, 25 g sprühgetrocknetes Maltodextrin (DE-Wert 16,5 - 19,9; 5 Gew.-%), 70,6g Zulauf 1 und 10,2g Zulauf 2 wurde auf 85 °C erhitzt und 15 min bei dieser Temperatur gehalten. Anschließend wurden unter Aufrechterhalten der 85 °C zeitgleich beginnend die Restmengen der Zuläufe 1 und 2 kontinuierlich (Zulauf 1 innerhalb 2.5h, Zulauf 2 innerhalb von 3h) der Polymerisationszone zugeführt. Anschließend wurde noch eine Stunde (85 °C) nachpolymerisiert.

Zulauf 1:   450g n-Butylacrylat (90 Gew.-%)

40g Styrol (8 Gew.-%)

10g Acrylsäure (2 Gew.-%)

198g Wasser

7,5g 20%ige Disponil LDBS 20-Lösung (0,3 Gew.-% Disponil LDBS 20)

Zulauf 2:   104,2g 2,4 Gew.-%ige wässrige Lösung von Natriumperoxodisulfat (0,5 Gew.-%)

Anschließend wurde die chemische Desodorierung durchgeführt (85 °C). Dazu wurden 2,2g einer 25%-igen wässrigen Wasserstoffperoxid-Lösung (0,11 Gew.-% Wasserstoffperoxid) zugegeben und 5 min eingerührt. Anschließend wurden 50% eines Zulaufs 3 aus 5,49g einer 9,1 gew.-%igen wässrigen Ascorbinsäurelösung (0,1 Gew.-% Ascorbinsäure) und 2,85g Wasser zugegeben und 10 min eingerührt, gefolgt von der Zugabe der restlichen 50% des Zulaufs 3 und 14,89g Wasser. Anschließend wurde auf Raumtemperatur abgekühlt und filtriert.

**Beispiel 2**

Eine Mischung bestehend aus 200g Wasser, 200 g sprühgetrocknetes Maltodextrin (DE-Wert 16,5 - 19,9; 40 Gew.-%), 70,5g Zulauf 1 und 10,2g Zulauf 2 wurde auf 85 °C erhitzt und 15 min bei dieser Temperatur gehalten. Anschließend wurden unter Aufrechterhalten der 85 °C zeitgleich beginnend die Restmengen der Zuläufe 1 und 2 kontinuierlich (Zulauf 1 innerhalb 2.5h, Zulauf 2 innerhalb von 3h) der Polymerisationszone zugeführt. Anschließend wurde noch eine Stunde (85 °C) nachpolymerisiert.

Zulauf 1:  250g n-Butylacrylat (50 Gew.-%)
225g Styrol (45 Gew.-%)
25g Acrylsäure (5 Gew.-%)
202g Wasser
2,5g 20%ige Disponil LDBS 20-Lösung (0,1 Gew.-% Disponil LDBS 20)

Zulauf 2:  104,2g 2,4 Gew.-%ige wässrige Lösung von Natriumperoxodisulfat (0,5 Gew.-%)

Anschließend wurde die chemische Desodorierung durchgeführt (85 °C). Dazu wurden 2,2g einer 25%-igen wässrige Wasserstoffperoxid-Lösung (0,11 Gew.-% Wasserstoffperoxid) zugegeben und 5 min eingerührt. Anschließend wurden 50% eines Zulaufs 3 aus 5,49g einer 9,1 gew.-%igen wässrigen Ascorbinsäurelösung (0,1 Gew.-% Ascorbinsäure) und 2,85g Wasser zugegeben und 10 min eingerührt, gefolgt von der Zugabe der restlichen 50% des Zulaufs 3 und 188,89g Wasser. Anschließend wurde auf Raumtemperatur abgekühlt und filtriert.

Tabelle 1

| Dispersionen - Gefrier-Auftau -Stabilitätstest | Vergleichsbeispiel 1 | Vergleichsbeispiel 2 | Beispiel 1 | Beispiel 2 |
|---|---|---|---|---|
| **Gefrier-Auftau-Zyklen** | | | | |
| 1/ 24h bei -20°C, 24h 23°C | koaguliert | koaguliert | stabil | stabil |
| 2/ 24h bei -20°C, 24h 23°C | - | - | stabil | stabil |
| 3/ 24h bei -20°C, 24h 23°C | - | - | stabil | stabil |
| 4/ 24h bei -20°C, 24h 23°C | - | - | stabil | stabil |
| 5/ 24h bei -20°C, 24h 23°C | - | - | stabil | stabil |
| Feststoff-Gehalt | 49,5% | 49,4% | 50,0% | 48,2% |

Wie in der Tabelle 1 ersichtlich, weisen die erfindungsgemäßen Beispiele 1 und 2 nach fünf Zyklen bei -20°C für 24h und 23°C bei 24h eine stabile Phase auf, wohingegen die Vergleichsbeispiele 1 und 2 koagulieren.

Tabelle 2

| Bindemittel-Formulierung | 1 | 2 | 3 | 4 |
|---|---|---|---|---|
| Vergleichsbeispiel 1 | 63 | - | - | - |
| Vergleichsbeispiel 2 | - | 63 | - | - |
| Beispiel 2 | - | - | 63 | - |
| Beispiel 1 | - | - | - | 63 |
| mit NaOH auf pH = 8 eingestellt | Ja | Ja | Ja | ja |
| | | | | |
| Dispex® CX 4231 | 1 | 1 | 1 | 1 |
| Omyacarb® 5 GU | 33 | 33 | 33 | 33 |
| Rheovis® AS 1130 | 3 | 3 | 3 | 3 |
| Summe | 100 | 100 | 100 | 100 |

(fortgesetzt)

| Test | | | | |
|---|---|---|---|---|
| **Gefrier-Auftau-Zyklen** | | | | |
| 1/ 24h bei -20°C, 24h 23°C | stabil | stabil | stabil | stabil |
| 2/ 24h bei -20°C, 24h 23°C | stabil | koaguliert | stabil | stabil |
| 3/ 24h bei -20°C, 24h 23°C | stabil | koaguliert | stabil | stabil |
| 4/ 24h bei -20°C, 24h 23°C | stabil | - | stabil | stabil |
| 5/ 24h bei -20°C, 24h 23°C | stabil | - | stabil | stabil |

| Name des Produkts (in Tabelle 2) | Funktion | Lieferant |
|---|---|---|
| (Vergleichsbeispiele 1 - 2; Beispiele 1 - 2) | Bindemittel | BASF SE |
| Dispex® DX 4231 | Pigmentverteiler | BASF SE |
| Omyacarb® 5 GU | Füllstoff | Fa. Omya GmbH, 50968 Köln |
| Rheovis® AS 1130 | Verdicker | BASF SE |

Wie in der Tabelle 2 ersichtlich, weisen die erfindungsgemäßen Bindemittel-Formulierungen 1,3 und 4 nach fünf Zyklen bei -20°C für 24h und 23°C bei 24h eine stabile Phase auf, wohingegen Beispiel 2 koaguliert.

**Patentansprüche**

1. Verfahren zur Herstellung einer Gefrier-Auftau-stabilen, wässrigen Dispersion umfassend die Schritte:

    a) Bereitstellen einer Mischung A umfassend

    - 20 - 79,5 Gew.-% wenigstens eines Esters aus ethylenisch ungesättigten Monomeren A,
    - 20 - 79,5 Gew.-% wenigstens eines ethylenisch ungesättigten Monomeren B, welches sich von Monomer A unterscheidet,
    - 0,5 - 5 Gew.-% wenigstens eines säuregruppenhaltigen ethylenisch ungesättigten Monomeren C, wobei die Gesamtmenge der Monomere A bis C 100 Gew.-% ergibt,

    b) Bereitstellen von 20 - 55 Gew.-% mindestens einer Saccharidverbindung S, bezogen auf die Menge der zu polymerisierenden Monomere A bis C, wobei die Saccharidverbindung S Maltodextrin ist und DE-Werte von 3 - 20 und ein gewichtsmittleres Molekulargewicht von 15000 - 30000 g/mol aufweist,
    c) Bereitstellen von 20 - 150 Gew.-% wasserlöslichen Lösungsmitteln und/oder Wasser W, bezogen auf die Menge der zu polymerisierenden Monomere A bis C,
    d) Bereitstellen von 0,1 - 2 Gew.-% mindestens einem Polymerisationsinitiator I, bezogen auf die Menge der zu polymerisierenden Monomere A bis C,
    e) Polymerisieren der Monomeren A bis C in Gegenwart von S, W und I zu dem Polymerisat P,

    wobei die wässrige Dispersion mindestens einem Gefrier- und Auftauprozess ausgesetzt wird, wobei die Dispersion frei ist von Gefrier-Auftau-stabilisierenden Additiven und wobei Gefrier-Auftau-stabilisierende Additive anionische, kationische oder nichtionische Emulgatoren sind.

2. Verfahren zur Herstellung einer Dispersion nach Anspruch 1, wobei 5 - 15 Gew.-% der Gesamtmenge der Mischung A, und 4 - 8 Gew.-% der Gesamtmenge des Polymerisationsinitiators I und 25 - 35 Gew.-% der Gesamtmenge des Wasser W bereitgestellt und polymerisiert werden und innerhalb von 6 h der Rest von der Mischung A, des Polymerisationsinitiators I und des Wassers W hinzugegeben werden.

3. Gefrier-Auftau-stabile, wässrige Dispersion erhältlich nach einem Verfahren gemäß den Ansprüchen 1 oder 2.

4. Verwendung einer Gefrier-Auftau-stabilen, wässrigen Dispersion nach Anspruch 3 als Bindemittel für Beschichtungen, Dichtmassen, zementäre Beschichtungen, nicht zementäre Beschichtungen, Klebstoffe und Grundierungen.

**5.** Verwendung einer Gefrier-Auftau-stabilen, wässrigen Dispersion nach Anspruch 3 als kälte- und/oder hitzebeständiges Bindemittel für Beschichtungen, Dichtmassen, zementäre Beschichtungen, nicht zementäre Beschichtungen, Klebstoffe und Grundierungen.

**6.** Verfahren zur Herstellung eines Formkörpers aus körnigen und/oder faserförmigen Substraten, wobei eine Gefrier-Auftau-stabile Dispersion nach Anspruch 3 auf das körnige und/oder faserförmige Substrat aufgebracht wird, gegebenenfalls das so behandelte körnige und/oder faserförmige Substrat in Form gebracht wird und anschließend das so erhaltene körnige und/oder faserförmige Substrat einem thermischen Behandlungsschritt bei einer Temperatur ≥ 110 °C unterzogen wird.

**7.** Gefrier-Auftau-stabile Formulierung umfassend die Gefrier-Auftau-stabile Dispersion gemäß Anspruch 3, mindestens einen Pigmentverteiler, mindestens einen Füllstoff und mindestens einen Verdicker.

**8.** Gefrier-Auftau-stabile Formulierung umfassend

- 1 - 99,9 Gew.-% der Gefrier-Auftau-stabilen, wässrigen Dispersion gemäß Anspruch 3,
- 0 - 5 Gew.-% mindestens eines Pigmentverteilers,
- 0 - 80 Gew.-% mindestens eines Füllstoffes,
- 0,1 - 10 Gew.-% mindestens eines Verdickers, und
- 0 - 5 Gew.-% mindestens eines Additives,

wobei sich die Gesamtmenge der Komponenten auf 100 Gew.-% summiert.

**9.** Gefrier-Auftau-stabile Formulierung bestehend aus

- 1 - 99,9 Gew.-% der Gefrier-Auftau-stabilen, wässrigen Dispersion gemäß Anspruch 3,
- 0 - 5 Gew.-% mindestens eines Pigmentverteilers,
- 0 - 80 Gew.-% mindestens eines Füllstoffes,
- 0,1 - 10 Gew.-% mindestens eines Verdickers, und
- 0 - 5 Gew.-% mindestens eines Additives,

wobei sich die Gesamtmenge der Komponenten auf 100 Gew-% summiert.

**Claims**

**1.** A method of forming a freeze-thaw-stable aqueous dispersion comprising the steps of:

a) providing a mixture A comprising

- 20-79.5 wt% of at least one ester from ethylenically unsaturated monomers A,
- 20-79.5 wt% of at least one ethylenically unsaturated monomer B other than monomer A,
- 0.5-5 wt% of at least one acid-functional ethylenically unsaturated monomer C, wherein the overall amount of monomers A to C is 100 wt%,

b) providing 20-55 wt% of at least one saccharide compound S, based on the amount of monomers A to C to be polymerized, wherein said saccharide compound S is maltodextrin and has DE values of 3-20 and a weight average molecular weight of 15000-30000 g/mol,
c) providing 20-150 wt% of water-soluble solvents and/or water W, based on the amount of monomers A to C to be polymerized,
d) providing 0.1-2 wt% of at least one polymerization initiator I, based on the amount of monomers A to C to be polymerized,
e) polymerizing said monomers A to C in the presence of S, W and I to form the polymer P,

wherein the aqueous dispersion is exposed to at least one freeze-thaw process, wherein said dispersion is free from freeze-thaw-stabilizing additives and wherein freeze-thaw-stabilizing additives are anionic, cationic or nonionic emulsifiers.

**2.** The method of forming a dispersion according to claim 1 wherein 5-15 wt% of the total of mixture A and 4-8 wt% of the total of polymerization initiator I and 25-35 wt% of the total of water W are provided and polymerized and within 6 h the remainder of mixture A, of polymerization initiator I and of water W is added.

**3.** A freeze-thaw-stable aqueous dispersion obtainable by a method according to claims 1 or 2.

**4.** The method of using a freeze-thaw-stable aqueous dispersion according to claim 3 as a binder for coatings, sealants, cementitious coatings, noncementitious coatings, adhesives and primers.

**5.** The method of using a freeze-thaw-stable aqueous dispersion according to claim 3 as a cold- and/or heat-resistant binder for coatings, sealants, cementitious coatings, noncementitious coatings, adhesives and primers.

**6.** A method of forming a shaped article from granular and/or fibrous substrates which comprises applying a freeze-thaw-stable dispersion according to claim 3 to the granular and/or fibrous substrate, optionally shaping the granular and/or fibrous substrate thus treated and then subjecting the granular and/or fibrous substrate thus obtained to a thermal treating step at a temperature $\geq$ 110°C.

**7.** A freeze-thaw-stable formulation comprising the freeze-thaw-stable dispersion according to claim 3, at least one pigment disperser, at least one filler and at least one thickener.

**8.** The freeze-thaw-stable formulation comprising

- 1-99.9 wt% of freeze-thaw-stable aqueous dispersion according to claim 3,
- 0-5 wt% of at least one pigment disperser,
- 0-80 wt% of at least one filler,
- 0.1-10 wt% of at least one thickener, and
- 0-5 wt% of at least one additive,

wherein the components sum to an overall amount of 100 wt%.

**9.** The freeze-thaw-stable formulation consisting of

- 1-99.9 wt% of freeze-thaw-stable aqueous dispersion according to claim 3,
- 0-5 wt% of at least one pigment disperser,
- 0-80 wt% of at least one filler,
- 0.1-10 wt% of at least one thickener, and
- 0-5 wt% of at least one additive,

wherein the components sum to an overall amount of 100 wt%.

**Revendications**

**1.** Procédé pour la préparation d'une dispersion aqueuse stable à la congélation-décongélation, comprenant les étapes :

a) disposition d'un mélange A comprenant

- 20 - 79,5 % en poids d'au moins un ester de monomère A à insaturation éthylénique,
- 20 - 79,5 % en poids d'au moins un monomère B à insaturation éthylénique, qui diffère du monomère A,
- 0,5 - 5 % en poids d'au moins un monomère C à insaturation éthylénique, contenant des groupes acides, la quantité totale des monomères A à C étant égale à 100 % en poids,

b) disposition de 20 - 55 % en poids d'au moins un composé saccharidique S, par rapport à la quantité des monomères A à C à polymériser, le composé saccharidique S étant la maltodextrine et présentant des valeurs de DE de 3 - 20 et une masse moléculaire moyenne en poids de 15 000 - 30 000 g/mole,
c) disposition de 20 - 150 % en poids de solvants hydrosolubles et/ou d'eau W, par rapport à la quantité des monomères A à C à polymériser,

d) disposition de 0,1 - 2 % en poids d'au moins un amorceur de polymérisation I, par rapport à la quantité des monomères A à C à polymériser,

e) polymérisation des monomères A à C en présence de S, W et I, conduisant au polymérisat P,

la dispersion aqueuse étant exposée à au moins un processus de congélation et décongélation, la dispersion étant exempte d'additifs stabilisateurs vis-à-vis de la congélation-décongélation et les additifs stabilisateurs vis-à-vis de la congélation-décongélation étant des émulsifiants anioniques, cationiques ou non ioniques.

2. Procédé pour la préparation d'une dispersion selon la revendication 1, dans lequel on dispose et polymérise 5 - 15 % en poids de la quantité totale du mélange A et 4 - 8 % en poids de la quantité totale de l'amorceur de polymérisation I et 25 - 35 % en poids de la quantité totale de l'eau W et on y ajoute en l'espace de 6 h le reste du mélange A, de l'amorceur de polymérisation I et de l'eau W.

3. Dispersion aqueuse stable à la congélation-décongélation, pouvant être obtenue conformément à un procédé selon la revendication 1 ou 2.

4. Utilisation d'une dispersion aqueuse stable à la congélation-décongélation selon la revendication 3, en tant que liant pour des revêtements, des matières d'étanchéité, des revêtements cimentaires, des revêtements non cimentaires, des adhésifs et des apprêts.

5. Utilisation d'une dispersion aqueuse stable à la congélation-décongélation selon la revendication 3, en tant que liant, résistant au froid ou et/ou à la chaleur, pour des revêtements, des matières d'étanchéité, des revêtements cimentaires, des revêtements non cimentaires, des adhésifs et des apprêts.

6. Procédé pour la production d'un corps moulé à base de supports granulaires et/ou fibreux, dans lequel on applique sur le support granulaire et/ou fibreux une dispersion stable à la congélation-décongélation selon la revendication 3, éventuellement on met en forme le support granulaire et/ou fibreux ainsi traité et ensuite on soumet le support granulaire et/ou fibreux ainsi obtenu à une étape de traitement thermique à une température $\geq$ 110 °C.

7. Composition stable à la congélation-décongélation, comprenant la dispersion stable à la congélation-décongélation selon la revendication 3, au moins un dispersant pour pigments, au moins une charge et au moins un épaississant.

8. Composition stable à la congélation-décongélation, comprenant

- 1 - 99,9 % en poids de la dispersion aqueuse stable à la congélation-décongélation selon la revendication 3,
- 0 - 5 % en poids d'au moins un dispersant pour pigments,
- 0 - 80 % en poids d'au moins une charge,
- 0,1 - 10 % en poids d'au moins un épaississant, et
- 0 - 5 % en poids d'au moins un additif,

la quantité totale des composants représentant un total de 100 % en poids.

9. Composition stable à la congélation-décongélation, constituée de

- 1 - 99,9 % en poids de la dispersion aqueuse stable à la congélation-décongélation selon la revendication 3,
- 0 - 5 % en poids d'au moins un dispersant pour pigments,
- 0 - 80 % en poids d'au moins une charge,
- 0,1 - 10 % en poids d'au moins un épaississant, et
- 0 - 5 % en poids d'au moins un additif,

la quantité totale des composants représentant un total de 100 % en poids.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 5618876 A
- EP 0276770 A2
- WO 2012117017 A1
- EP 0536597 A1
- DE 4003422 A
- EP 771328 A
- DE 19624299 A
- DE 19621027 A
- DE 19741184 A
- DE 19741187 A
- DE 19805122 A
- DE 19828183 A
- DE 19839199 A
- DE 19840586 A
- DE 19847115 A
- EP 441197 A

**In der Beschreibung aufgeführte Nicht-Patentliteratur**

- Encyclopedia of Polymer Science and Engineering. 1987, vol. 8, 659 ff
- **D.C. BLACKLEY.** *High Polymer Latices,* 1966, vol. 1, 35 ff
- **H. WARSON.** *The Applications of Synthetic Resin Emulsions,* 1972, vol. 5, 246 ff
- **D. DIEDERICH.** *Chemie in unserer Zeit,* 1990, vol. 24, 135-142
- Emulsion Polymerisation. Interscience Publishers, 1965
- **F. HÖLSCHER.** Dispersionen synthetischer Hochpolymerer. Springer-Verlag, 1969
- **AUCH ULLMAN'S.** Encyclopedia of Industrial Chemistry. Verlag Chemie, 1992, 169
- **ZOSEL.** *Farbe und Lack,* 1976, vol. 82, 125-134
- **T.G. FOX.** *Bull. Am. Phys. Soc.,* 1956, 123
- **ULLMANN'S.** Encyclopädie der technischen Chemie. Verlag Chemie, 1980, vol. 19, 18
- **J. BRANDRUP ; E.H. IMMERGUT.** Polymer Handbook. J. Wiley, 1966
- POLYMER HANDBOOK. 1975
- POLYMER HANDBOOK. 1989
- Ullmann's Encyclopedia of Industrial Chemistry. Verlag Chemie, 1992, 169
- **GÜNTHER TEGGE.** Stärke und Stärkederivate. Behr's Verlag, 1984, 173-220
- Makromolekulare Stoffe. Georg Thieme Verlag, 1961, 192-208
- Günther Tegge, Stärke und Stärkederivate. Behr's Verlag, 1984, 305